# EUROPÄISCHE PATENTANMELDUNG

(11) **EP 1 465 307 A2**
(43) Veröffentlichungstag der Anmeldung: **06.10.2004**
(21) Anmeldenummer: 04003214.6
(22) Anmeldetag: 13.02.2004
(51) Int. Cl.: H02G 3/04, H02G 3/32

(54) **Profilleiste aus Kunststoff zum Halten einer Vielzahl von elektrischen Leitungen**

(30) Priorität: 02.04.2003 DE 10314937
(71) Anmelder: Friedrich Lütze Elektro GmbH, 71384 Weinstadt (DE)
(72) Erfinder: Schauermann, Dettmar, 64711 Erbach (DE); Lang, Jürgen, 71640 Ludwigsburg (DE)
(74) Vertreter: Vetter, Hans, Dipl.-Phys.Dr.

(57) **Zusammenfassung**

Es wird eine Profilleiste aus Kunststoff zum Halten einer Vielzahl von elektrischen Leitungen, insbesondere in Schaltund Steuerungstafeln und -schränken, vorgeschlagen. Sie weist einen Befestigungsbereich (10) zum Befestigen an einer Montageschiene und einen daran angeformten kammartigen Leitungs-Haltebereich (17) auf, welcher aus einer Vielzahl von parallelen Zähnen (15) besteht, zwischen denen sich Einlegeschlitze (19) zum Einlegen der elektrischen Leitungen erstrecken. Diese Einlegeschlitze (19) sind jeweils seitlich durch an den Zähnen (15) angeordnete elastische Zungen (18) begrenzt, in denen jeweils mehrere quer zu den Einlegeschlitzen (19) verlaufende Querschlitze (20) vorgesehen sind. Die Kreuzungsstellen bilden dabei Haltestellen für Leitungen. Die Zungen (18) besitzen eine so große Elastizität, dass ihre die Kreuzungsstellen begrenzenden Bereiche beim Einlegung von Leitungen aus ihrer Ebene herausgebogen werden. Hierdurch können Leitungen mit unterschiedlichem Durchmesser an beliebigen Stellen und in beliebiger Reihenfolge zwischen den Zähnen eingelegt werden.

## Beschreibung

Die Erfindung betrifft eine Profilleiste aus Kunststoff zum Halten einer Vielzahl von elektrischen Leitungen, insbesondere in Schalt- und Steuerungstafeln und -schränken, die einen Befestigungsbereich zum Befestigen an einer Montageschiene und einen daran angeformten kammartigen Leitungs-Haltebereich aufweist, welcher aus einer Vielzahl von parallelen Zähnen besteht, zwischen denen im Wesentlichen parallel zu den Zähnen verlaufende Einlegeschlitze zum Einziehen oder Einlegen der elektrischen Leitungen gebildet werden, wobei die Einlegeschlitze seitlich durch an den Zähnen angeordnete elastische Zungen begrenzt sind.

Derartige Profilleisten sind beispielsweise aus der DE-PS 2330166 bekannt. Obwohl die elastischen Zungen der bekannten Profilleisten beim Einlegen von elektrischen Leitungen bis zu einem gewissen Maße nachgeben und sich an die Außenkontur dieser Leitungen anlegen, können doch nur Leitungen eingezogen werden, deren Durchmesser bis auf geringe Abweichungen gleich ist und an den Durchmesser von entsprechenden randseitigen Ausnehmungen in den Zungen angepasst ist. In modernen Schaltschränken und Steuerungstafeln werden jedoch häufig elektrische Leitungen mit stark unterschiedlichem Durchmesser verlegt. Bei Verwendung der bekannten Profilleisten müssen daher bei größeren Leitungsdurchmessern die Ausnehmungen vergrößert oder Zähne gewaltsam entfernt werden, oder die Leitungen müssen provisorisch mit einem Draht am entsprechenden Haltebereich angebunden werden. Andererseits würden eingelegte Leitungen mit geringerem Durchmesser infolge der relativ dazu größeren Ausnehmungen in den Zungen nicht sicher gehalten werden. All diese Maßnahmen führten nicht nur zu einer unübersichtlichen und unschönen Leitungsverlegung, sondern die erforderlichen Hilfsmaßnahmen führten auch zu einem größeren Zeit- und Kostenaufwand.

Um diese Probleme zu lösen, wurde in der DE 4323370 C2 vorgeschlagen, die Zungen mit unterschiedlichen Ausnehmungen für kleinere und größere Durchmesser zu versehen. Zusätzlich wurden für die kleineren Durchmesser Zwischenzähne vorgesehen. Auch diese Lösung ist jedoch mit dem Nachteil behaftet, dass wiederum nur Leitungen sicher festgehalten werden können, die innerhalb bestimmter Durchmesserbereiche liegen. Darüber hinaus müssen zwingend die Leitungen mit kleineren Durchmessern weiter unten im Bereich des jeweiligen Zwischenzahns und die Leitungen größerer Durchmesser darüber angeordnet werden. Dies bedeutet beispielsweise, dass Leitungen mit kleinerem Durchmesser nicht mehr eingelegt werden können, wenn zuvor eine Leitung mit größerem Durchmesser eingelegt ist. Ein weiterer Nachteil dieser bekannten Profilleisten ist die komplizierte Herstellung.

Eine Aufgabe der vorliegenden Erfindung besteht darin, eine Profilleiste der eingangs genannten Gattung so zu verbessern, dass elektrische Leitungen mit stark unterschiedlichen Durchmessern in beliebiger Reihenfolge an beliebigen Stellen der Profilleiste eingezogen bzw. eingelegt werden können.

Diese Aufgabe wird erfindungsgemäß dadurch gelöst, dass in den lamellenartigen Zungen jeweils mehrere quer zu den Einlegeschlitzen verlaufende Querschlitze vorgesehen sind, wobei die Kreuzungsstellen Haltestellen für Leitungen bilden, und dass die Zungen eine so große Elastizität besitzen, dass ihre die Kreuzungsstellen begrenzenden Bereiche beim Einlegen von Leitungen aus ihrer Ebene herausgebogen werden.

Der Vorteil der erfindungsgemäßen Profilleiste besteht insbesondere darin, dass Leitungen mit größerem und kleinerem Durchmesser in beliebiger Reihenfolge in einen Zwischenraum zwischen zwei Zähnen eingelegt werden können. Durch die Querschlitze werden die Kreuzungsstellen jeweils durch vier im Wesentlichen dreieckförmige Bereiche der Zungen begrenzt, die sich insbesondere in Verbindung mit einer großen Elastizität der Zungen beim Einlegen der Leitungen je nach deren Durchmesser mehr oder weniger herausbiegen und dann insbesondere bei großen Durchmessern flach an den Leitungen anliegen. Da sowohl die Querschlitze als auch die Einlegeschlitze beliebig schmal gemacht werden können, können selbst Leitungen mit sehr kleinem Durchmesser noch gut gehalten werden. Der Durchmesser der einzulegenden Leitungen ist nach oben hin lediglich durch den Abstand der Zähne begrenzt. Durch das Herausbiegen der dreieckigen Zungenbereiche wird auf die Zähne selbst eine relativ geringe Kraft durch die eingelegten Leitungen ausgeübt, sodass nicht die Gefahr besteht, dass die Zähne nach außen gebogen werden und dadurch den Zwischenraum für die nächsten Zähne verkleinern. Durch den einfachen Aufbau bei geschlitzten Zungen ist eine einfache und kostengünstige Fertigung möglich.

Durch die in den Unteransprüchen aufgeführten Maßnahmen sind vorteilhafte Weiterbildungen und Verbesserungen der im Anspruch 1 angegebenen Profilleiste möglich.

Die Breite der Einlegeschlitze und/oder Querschlitze kann so gering gewählt werden, dass sich die Begrenzungslinien berühren oder nahezu berühren. Hierdurch können auch Leitungen mit sehr kleinem Durchmesser noch sicher gehalten werden. Vorzugsweise ist die Schlitzbreite kleiner als 0,4 mm.

Eine besonders einfache und kostengünstige Fertigung wird dadurch erreicht, dass die elastischen Zungen einstückig an den Zähnen angeformt sind.

Eine hohe Stabilität und Festigkeit der Zähne bei geringstem Materialaufwand wird dadurch erreicht, dass diese als einstückig am Befestigungsbereich angeformte Hohlkörper ausgebildet sind. Diese Hohlkörper sind zweckmäßigerweise in der Ebene der seitlich an ihnen angeordneten Zungen offen.

Eine Optimierung von Materialaufwand und Festigkeit wird auch dadurch erreicht, dass sich die Zähne zu ihren freien Enden hin verjüngen.

Jede Zunge besitzt zweckmäßigerweise wenigstens zwei, vorzugsweise drei Querschlitze, um eine entsprechende Zahl von Leitungen aufnehmen zu können.

Jeweils der vom Befestigungsbereich entfernte freie Endbereich der Zähne besitzt vorteilhafterweise einen über die Ebene der Zungen hinausgehenden abgerundeten Vorsprung, der das Einlegen der Leitungen ohne diese zu beschädigen erleichtert. Weiterhin verhindert dieser abgerundete Vorsprung Verletzungen von Händen beim Einlegen von Leitungen.

Bevorzugt besitzt der Befestigungsbereich Öffnungen zum Befestigen, insbesondere Einstecken, von Bezeichnungsträgern, um auf einfache Weise die Leitungen bezeichnen zu können und die Bezeichnungen auch leicht ändern zu können. Diese Öffnungen sind zweckmäßigerweise mittig zwischen zwei Einlegeschlitzen angeordnet.

Voreilhafterweise sind die Profilleisten aneinanderreihbar ausgebildet und können auch bei Bedarf abgelängt werden, um eine Anpassung an die Breite von Montageschienen zu erreichen.

Ein Ausführungsbeispiel der Erfindung ist in der Zeichnung dargestellt und in der nachfolgenden Beschreibung näher erläutert. Es zeigen:
- Fig. 1: eine Teilansicht einer Profilleiste in einer Vorderansicht als Ausführungsbeispiel der Erfindung,
- Fig. 2: dieselbe Profilleiste in der Seitenansicht und

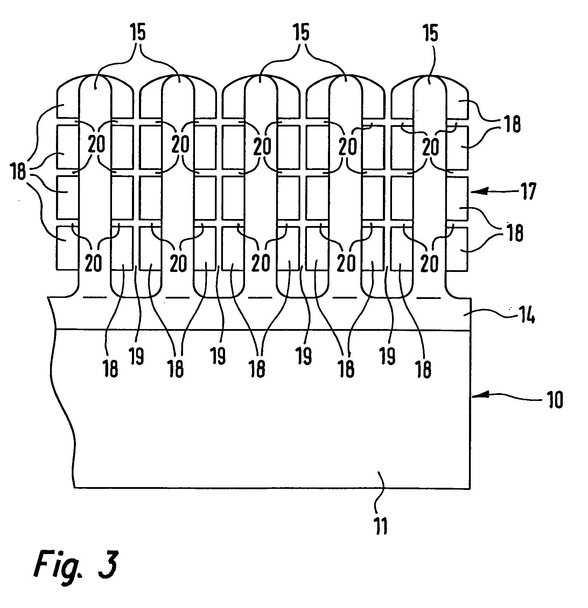

- Fig. 3: dieselbe Profilleiste in der Rückansicht.

Die in den Figuren dargestellte Profilleiste besitzt einen sich über ihre Länge erstreckenden Befestigungsbereich 10 mit ihm Wesentlichen U-förmigem Querschnitt. Ein leistenartiger Schenkel 11 dieses Befestigungsbereichs 10 besitzt an seinem freien Endbereich einen zum anderen leistenartigen Schenkel 12 hinweisenden Rastvorsprung 13, der hinter einem entsprechend geformten Rastvorsprung einer nicht dargestellten Montageschiene beim Aufstecken verrastet. Eine derartige Steckbefestigung einer Profilleiste an einer U-förmigen Montageschiene ist in der eingangs genannten DE-PS 2330166 perspektivisch dargestellt. Die Profilleisten können prinzipiell auch eine andere Form aufweisen, wobei dann jeweils nach gewünschter Anordnung der Profilleisten der Befestigungsbereich 10 auch um 90° versetzt angeordnet sein kann.

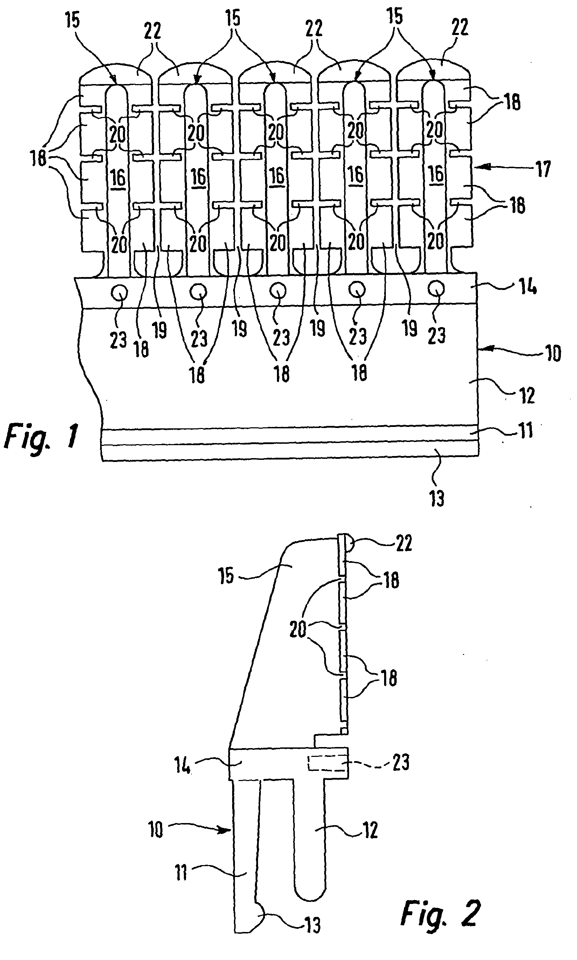

Auf einem die beiden Schenkel 11, 12 verbindenden Basisbereich 14 der Profilleiste sind äquidistante Zähne 15 einstückig angeformt. Diese sind als Hohlkörper ausgebildet und verjüngen sich zum vom Basisbereich 14 entfernten oberen freien Ende hin, wie dies aus Fig. 2 hervorgeht. Die die Zähne 15 bildenden Hohlkörper sind nach einer Seite hin offen, wobei die langgestreckten parallelen Öffnungen 16 zur Vorderseite hinweisen und in einer Ebene liegen. Die Zähne bilden dabei einen kammartigen Leitungs-Haltebereich 17.

An den Zähnen 15 sind in der Ebene der langgestreckten Öffnungen 16 um diese herum angeordnet elastische, lamellenartige Zungen 18 einstückig angeformt, derart, dass diese Zungen 18 in derselben Ebene liegen. Jeweils zwei sich gegeneinander erstreckende Zungen 18 von zwei Zähnen 15 begrenzen einen Einlegeschlitz 19, der parallel und mittig jeweils zwischen zwei Zähnen 15 verläuft. Dieser Einlegeschlitz 19 ist bevorzugt kleiner als 0,4 mm, kann jedoch auch so klein werden, dass sich die begrenzenden Zungen 18 berühren oder nahezu berühren.

Senkrecht zu den Einlegeschlitzen 19 sind in bestimmten, im Ausführungsbeispiel gleichmäßigen Abständen Querschlitze 20 angeordnet. Diese erstrecken sich durch die Zungen 18 bis zu den Zähnen 15 hin, sodass die Zungen 18 in rechteckförmige Segmente unterteilt werden. Prinzipiell wäre es auch möglich, dass sich die Querschlitze 20 nicht ganz bis zu den Zähnen 15 hin erstrecken.

Die Kreuzungsstellen zwischen Einlegeschlitzen 19 und Querschlitzen 20 bilden die Haltestellen für einzulegende, nicht dargestellte elektrische Leitungen. Beim Einlegen bzw. Einziehen derartiger Leitungen in die Einlegeschlitze 19 jeweils bis zu einer Haltestelle biegen sich die die Haltestellen begrenzenden, dreieckförmigen Bereiche der Zungen 18 nach außen und legen sich je nach Durchmesser der einzulegenden Leitungen mehr oder weniger an diese an und halten sie fest. Hierzu besitzen die Zungen 18 eine so große Elastizität, dass dieses Herausbiegen problemlos beim Einlegen vonstatten geht. Je nach Art des Kunststoffmaterials der Profilleiste müssen die Zungen 18 hierzu entsprechend dünnwandig ausgebildet sein.

Im Ausführungsbeispiel sind jeweils drei Haltestellen zwischen zwei Zähnen vorgesehen. Diese Zahl kann natürlich in Abhängigkeit der Art der einzulegenden Leitungen und der Länge der Zähne 15 auch variieren.

Beispielsweise können die Zähne 15 10 bis 30 mm lang sein.

Die vom Befestigungsbereich 10 entfernten freien Endbereiche der Zähne 15 besitzen jeweils einen über die Ebene der Zungen 18 hinausgehenden abgerundeten Vorsprung 22, der so breit ist, dass sich die Vorsprünge 22 gemäß der in Fig. 1 dargestellten Vorderansicht nahezu berühren und der Zwischenraum zwischen ihnen in der Größenordnung der Einlegschlitze 19 liegt. Durch diese abgerundeten Vorsprünge 22 wird verhindert, dass sich eine mit dem Einlegen von Leitungen befasste Person durch scharfe Kanten verletzt. Weiterhin erleichtern die in der Vorderansicht halbrundartigen Vorsprünge 22 das Einlegen der Leitungen.

Zur Vorderseite hin sind am Basisbereich 14 des Befestigungsbereichs 10 in gleichen Abständen Befestigungsöffnungen 23 angeordnet, in die nicht dargestellte Bezeichnungsträger zum Bezeichnen der jeweils eingezogenen Leitungen eingesteckt und dadurch befestigt werden können. Diese Befestigungsöffnungen 23 sind jeweils mittig zwischen zwei Einlegeschlitzen 19 angeordnet, also im Bereich der dazwischen liegenden Zähne 15.

Eine Profilleiste kann beispielsweise eine Länge von 300 mm aufweisen und 60 Zähne tragen. Derartige Profilleisten sind beliebig aneinanderreihbar und können auch beliebig abgelängt werden, um an die Länge einer Montageschiene angepasst zu werden.

## Patentansprüche

1. Profilleiste aus Kunststoff zum Halten einer Vielzahl von elektrischen Leitungen, insbesondere in Schalt- und Steuerungstafeln und -schränken, die einen Befestigungsbereich zum Befestigen an einer Montageschiene und einen daran angeformten kammartigen Leitungs-Haltebereich aufweist, welcher aus einer Vielzahl von parallelen Zähnen besteht, zwischen denen im Wesentlichen parallel zu den Zähnen verlaufende Einlegeschlitze zum Einziehen oder Einlegen der elektrischen Leitungen gebildet werden, wobei die Einlegeschlitze seitlich durch an den Zähnen angeordnete elastische Zungen begrenzt sind, **dadurch gekennzeichnet, dass** in den lamellenartigen Zungen (18) jeweils mehrere quer zu den Einlegeschlitzen (19) verlaufende Querschlitze (20) vorgesehen sind, wobei die Kreuzungsstellen von Einlegeschlitzen (19) und Querschlitzen (20) Haltestellen für Leitungen bilden, und dass die Zungen (18) eine so große Elastizität besitzen, dass ihre die Kreuzungsstellen begrenzenden Bereiche beim Einlegen von Leitungen aus ihrer Ebene herausgebogen werden.

2. Profilleiste nach Anspruch 1, **dadurch gekennzeichnet, dass** die Schlitzbreite der Einlegeschlitze (19) und/oder Querschlitze (20) so gering ist, dass sich die Begrenzungslinien berühren oder nahezu berühren.

3. Profilleiste nach Anspruch 2, **dadurch gekennzeichnet, dass** die Schlitzbreite kleiner als 0,4 mm ist.

4. Profilleiste nach einem der vorhergehenden Ansprüche, **dadurch gekennzeichnet, dass** die elastischen Zungen (18) einstückig an den Zähnen (15) angeformt sind.

5. Profilleiste nach einem der vorhergehenden Ansprüche, **dadurch gekennzeichnet, dass** die Zähne (15) als einstückig am Befestigungsbereich (10) angeformte Hohlkörper ausgebildet sind.

6. Profilleiste nach Anspruch 5, **dadurch gekennzeichnet, dass** die die Zähne (15) bildenden Hohlkörper in der Ebene der seitlich an ihnen angeordneten Zungen (18) offen sind.

7. Profilleiste nach einem der vorhergehenden Ansprüche, **dadurch gekennzeichnet, dass** sich die Zähne (15) zu ihrem freien Ende hin verjüngen.

8. Profilleiste nach einem der vorhergehenden Ansprüche, **dadurch gekennzeichnet**, das jede Zunge (18) wenigstens zwei, vorzugsweise drei Querschlitze (20) besitzt.

9. Profilleiste nach einem der vorhergehenden Ansprüche, **dadurch gekennzeichnet, dass** jeweils der vom Befestigungsbereich (10) entfernte freie Endbereich der Zähne (15) einen über die Ebene der Zungen (18) hinausgehenden abgerundeten Vorsprung (22) besitzt.

10. Profilleiste nach einem der vorhergehenden Ansprüche, **dadurch gekennzeichnet, dass** der Befestigungsbereich (10) Öffnungen (23) zum Befestigen, insbesondere Einstecken, von Bezeichnungsträgern besitzt.

11. Profilleiste nach Anspruch 10, **dadurch gekennzeichnet, dass** die Öffnungen (23) jeweils mittig zwischen zwei Einlegeschlitzen (19) angeordnet sind.

12. Profilleiste nach einem der vorhergehenden Ansprüche, **dadurch gekennzeichnet, dass** sie mit entsprechenden Profilleisten aneinanderreihbar ausgebildet ist.
